# EUROPÄISCHE PATENTSCHRIFT

(11) **EP 0 899 296 B1**
(45) Veröffentlichungstag und Bekanntmachung des Hinweises auf die Patenterteilung: **20.11.2002**
(21) Anmeldenummer: 98114773.9
(22) Anmeldetag: 06.08.1998
(51) Int. Cl.: C08K 5/00, C08K 5/5313, C08K 5/34

(54) **Synergistische Flammschutzmittel-Kombination für Kunststoffe**
Synergistic combination of flame protecting agents for plastics
Combinaison synergistique d' agents ignifugeants pour les matières plastiques

(30) Priorität: 29.08.1997 DE 19737727
(43) Veröffentlichungstag der Anmeldung: 03.03.1999
(73) Patentinhaber: Clariant GmbH, 65929 Frankfurt am Main (DE)
(72) Erfinder: Jenewein, Elke, 86368 Gersthofen (DE); Nass, Bernd, 86152 Augsburg (DE); Wanzke, Wolfgang, Dr., 86405 Meitingen (DE)

(56) Entgegenhaltungen:
- EP-A- 0 006 568
- EP-A- 0 794 191
- WO-A-97/39053
- BE-A- 700 042
- DATABASE WPI Section Ch, Week 199404 Derwent Publications Ltd., London, GB; Class A13, AN 1994-031907 XP002164529 -& JP 05 339417 A (ASAHI CHEM IND CO LTD), 21. Dezember 1993 (1993-12-21)

## Beschreibung

Die Erfindung betrifft eine synergistische Flammschutzmittel-Kombination, die Salze von 1-Hydroxy-dihydrophospholoxiden und/oder 1-Hydroxyphospholanoxiden und bestimmte stickstoffhaltige Verbindungen enthält.

Polymere werden häufig dadurch flammwidrig ausgerüstet, daß man diesen phosphorhaltige oder halogenhaltige Verbindungen oder Gemische davon,zusetzt. Auch Gemische von phosphor- und stickstoffhaltigen Verbindungen werden oft als Flammhemmer verwendet.

Salze von Phosphinsäuren haben sich als wirksame flammhemmende Zusätze für Polymere erwiesen, sowohl Alkalimetallsalze (DE-A-2 252 258) als auch Salze anderer Metalle (DE-A-2 447 727).

Calcium- und Aluminiumphosphinate sind in Polyestem als besonders wirksam beschrieben worden und beeinträchtigen die mechanischen Eigenschaften der Polymerformmassen weniger als die Alkalimetallsalze (EP-A 699 708).

Synergistische Kombinationen von Alkyl- bzw. Arylphosphinaten mit bestimmten stickstoffhaltigen Verbindungen wirken in einer ganzen Reihe von Polymeren effektiver als die Phosphinate allein (PCT/EP 97/01664).

In jüngster Zeit sind auch alicyclische Phosphinate, wie z. B. die Salze von 1-Hydroxyphospholanoxiden, als Flammschutzmittel, besonders für Polyester und Polyamid, beschrieben worden (Europäische Patentanmeldung Nr. 97 102 722.2). Der Flammschutzeffekt ist jedoch, besonders bei dünnwandigen Formteilen für die Elektroindustrie, etwas schwächer ausgeprägt als der vergleichbarer Alkylphosphinate. Die alicyclischen Phosphinate sind aber weniger wasserlöslich als die Alkylphosphinate und daher besser für die Anwendung in polymeren Formmassen für die Elektroindustrie geeignet.

Es wurde nun überraschend gefunden, daß durch Zusatz von stickstoffhaltigen Synergisten die Wirksamkeit der alicyclischen Phosphinate, insbesondere in dünnwandigen Formteilen, ganz erheblich gesteigert werden kann und damit ein Flammschutz-Niveau erreicht wird, das dem der synergistischen Mischungen mit Alkylphosphinaten entspricht.

Gegenstand der Erfindung ist somit eine synergistische Flammschutzmittel-Kombination für thermoplastische Polymere, die als Komponente A ein Salz von 1-Hydroxy-dihydrophospholoxiden gemäß der Formel (la) oder Formel (Ib) und/oder 1-Hydroxyphospholanoxiden gemäß der Formel (II) enthält, 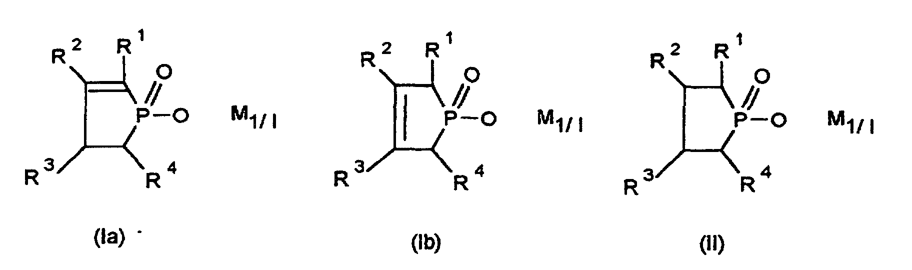 worin
- R¹ bis R⁴: Wasserstoff oder C₁-C₁₂-Alkyl, bevorzugt C₁-C₄-Alkyl, insbesonders Methyl oder Ethyl;
- M: ein Metall aus der zweiten oder dritten Haupt- oder Nebengruppe des Periodensystems, wie Magnesium, Calcium, Zink, Aluminium, bevorzugt Aluminium,
- I: die Zahlen 1, 2 oder 3
bedeuten,
und die als Komponente B eine Stickstoffverbindung der Formel (III) bis (VIII) oder ein Gemisch der durch die Formeln bezeichneten Verbindungen enthält, 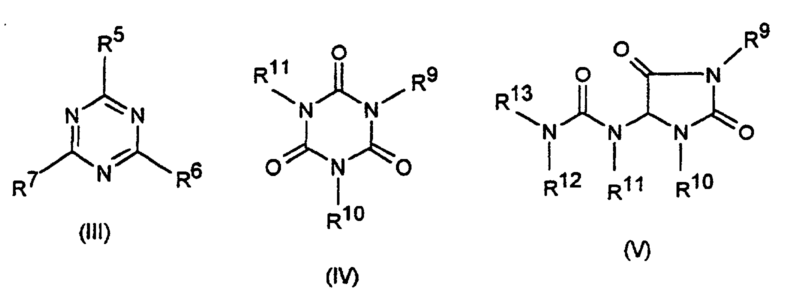 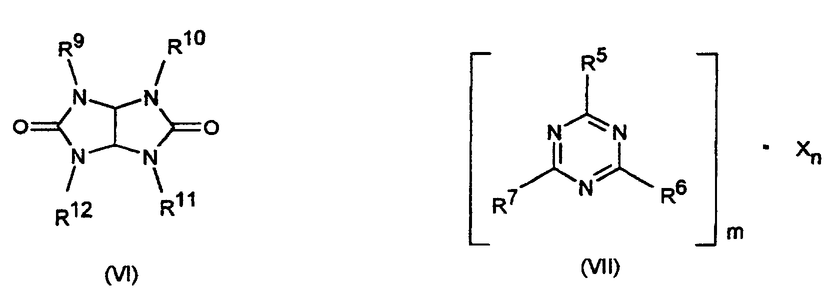 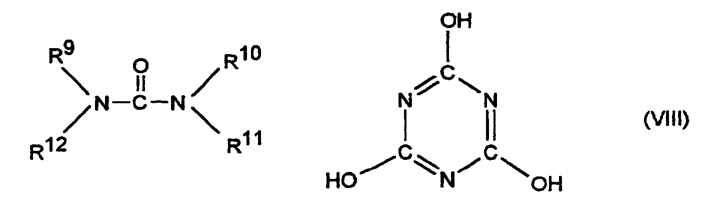 worin R⁵, R⁶ und R⁷ folgende Bedeutung haben können: Wasserstoff, C₁-C₈-, vorzugsweise C₁-C₄-Alkyl, C₅-C₁₆-, vorzugsweise C₅-C₈-Cycloalkyl oder -Alkylcycloalkyl möglicherweise substituiert mit einer Hydroxy- oder einer C₁-C₄-Hydroxyalkyl-Funktion, C₂-C₈-, vorzugsweise C₂-C₄-Alkenyl, C₁-C₈-, vorzugsweise C₁-C₄-Alkoxy, -Acyl, -Acyloxy, C₆-C₁₂-Aryl oder -Arylalkyl, vorzugsweise C₆-C₁₀-Aryl oder -Arylalkyl sowie -OR⁸ und -N(R⁸)R⁹ (ausgenommen Melamin, R⁸=R⁹=H) sowie N-alicyclisch oder N-aromatisch. N-alicyclisch bezeichnet in diesem Fall cyclische Heteroalkane oder Heteroalkene mit 1 bis 2 N-Atomen und einer Ringgröße von 5 bis 8, vorzugsweise von 5 bis 6. Beispiele hierfür sind Pyrrolidin, Piperidin, Imidazolidin, Piperazin oder 2,5-Dihydro-pyrrol. N-aromatisch bezeichnet heteroaromatische 5- oder 6-Ringverbindungen, die 1 bis 2 N-Atome im Ring enthalten, wie Pyrrol, Pyridin, Imidazol, Pyrazin, sowie kondensierte Aromaten mit 9 bis 14, bevorzugt 9 bis 10 C-Atomen, von denen 1 bis 3, vorzugsweise 1 bis 2 CH-Gruppen durch ein N-Atom ersetzt sein können, wie z.B. Chinolin, Phenanthrolin, Phenazin.

R⁸ bezeichnet folgende Gruppen: Wasserstoff, C₁-C₈-, vorzugsweise C₁-C₄-Alkyl, C₅-C₁₆-, vorzugsweise C₅-C₈-Cycloalkyl oder -Alkylcycloalkyl möglicherweise substituiert mit einer Hydroxy- oder einer C₁-C₄-Hydroxyalkyl-Funktion, C₂-C₈-, vorzugsweise C₂-C₄-Alkenyl, C₁-C₈-, vorzugsweise C₁-C₄-Alkoxy, -Acyl, -Acyloxy oder C₆-C₁₂-, vorzugsweise C₆-C₁₀-Aryl oder -Arylalkyl.
- R⁹, R¹⁰, R¹¹, R¹² und R¹³: kennzeichnen die gleichen Gruppen wie R⁸ sowie -O-R⁸.
- m, n: 1,2, 3 oder 4.
- X: Säuren, die Addukte mit Triazinverbindungen (III) (einschließlich Melamin) bilden können, z.B. Cyanursäure, Phosphorsäure, Orthoborsäure, Metaborsäure.

Im folgenden bezeichnet der Begriff "Salz" Salze der 1-Hydroxy-dihydrophospholoxide und der 1-Hydroxyphospholanoxide.

Geeignete Salze sind beispielsweise: Die Erdalkali-, Magnesium-, Zink- und Aluminiumsalze von 1-Hydroxy-3-Alkyl-2,3-dihydro-1H-phosphol-1-oxid, 1-Hydroxy-3-methyl-2,5-dihydro-1H-phosphol-1-oxid, 1-Hydroxy-2,3-dihydro-1H-phosphol-1-oxid, 1-Hydroxy-2,5-dihydro-1H-phosphol-1-oxid, 1-Hydroxy-1H-phospholan-1-oxid und 1-Hydroxy-3-methyl-1H-phospholan-1-oxid sowie Gemische dieser Salze. Die Aluminiumsalze sind bevorzugt.

Die Salze können aus den 1-Hydroxy-dihydrophospholoxiden und 1-Hydroxyphospholanoxiden nach bekannten Methoden hergestellt werden, dabei können in wässriger Lösung die Metallcarbonate, Metallhydroxide oder Metalloxide eingesetzt werden. Die 1-Hydroxy-dihydrophospholoxide sind nach bekannten Verfahren aus den 1-Chlor-dihydrophospholoxiden zugänglich, die beispielsweise entsprechend EP-A-0452755 hergestellt werden können. Aus ihnen können durch Hydrierung die 1-Hydroxy-phospholanoxide hergestellt werden.

Polymere im Sinne der Erfindung sind auch in der Anmeldung PCT/EP 97/01664 auf den Seiten 6 bis 9 beschrieben, worauf hier ausdrücklich Bezug genommen wird.

Die Menge der den Polymeren zuzusetzenden Salze kann innerhalb weiter Grenzen variieren. Im allgemeinen verwendet man 1 bis 30 Gew.-%, bezogen auf das fertige Polymercompound. Die optimale Menge hängt von der Natur des Polymeren, der Art der Komponente B und vom Typ des eingesetzten Salzes selbst ab und kann durch Versuche leicht bestimmt werden. Bevorzugt sind 3 bis 20, insbesondere 5 bis 15 Gew.-%.

Die Salze gemäß der Erfindung können je nach Art des verwendeten Polymeren und der gewünschten Eigenschaften in verschiedener physikalischer Form angewendet werden. So können die Salze z.B. zur Erzielung einer besseren Dispersion im Polymeren zu einer feinteiligen Form vermahlen werden. Falls erwünscht können auch Gemische verschiedener Salze eingesetzt werden.

Die Salze gemäß der Erfindung sind thermisch stabil, zersetzen die Polymeren weder bei der Verarbeitung noch beeinflußen sie den Herstellprozess der Kunststofformmasse. Die Salze sind unter Herstellungs- und Verarbeitungsbedingungen für Polymere nicht flüchtig.

Als Komponente B enthält die synergistische Flammschutzmittel-Kombination eine Stickstoffverbindung der Formel (III) bis (VIII) oder ein Gemisch der durch die Formeln bezeichneten Verbindungen.

Formel (VII) kennzeichnet Addukte der Triazinverbindungen (III) (einschließlich Melamin) mit geeigneten Säuren, wobei m und n jeweils 1, 2, 3 oder 4 sein können.

Beispiele für solche Verbindungen sind Melamincyanurat, Melaminphosphat, Dimelaminphosphat, Melaminpyrophosphat, Melamindiborat.

Ebenfalls als Komponente B eingesetzt werden können oligomere Ester des Tris(hydroxyethyl)isocyanurats mit aromatischen Polycarbonsäuren, wie sie in EP-A 584 567 beschrieben sind.

Ebenfalls als Komponente B eingesetzt werden können stickstoffhaltige Phosphate der Formeln (NH₄)_{y} H_{3-y} PO₄ bzw. (NH₄ PO₃)_{z}, wobei y Zahlenwerte von 1 bis 3 annehmen kann und z eine beliebig große Zahl, typischerweise auch als Durchschnittswert einer Kettenlängenverteilung, darstellt.

Bevorzugte Stickstoffverbindungen im Sinne der Erfindung sind Benzoguahamin (Formel III, R⁵ = Phenyl, R⁶ = R⁷ = -NH₂), Tris(hydroxyethyl)isocyanurat (Formel IV, R⁹ = R¹⁰ = R¹¹ = -CH₂-CH₂-OH), Allantoin (Formel V, R⁹ = R¹⁰ = R¹¹ = R¹² = R¹³ = H), Glycoluril (Formel VI, R⁹ = R¹⁰ = R¹¹ = R¹² = H) sowie Melamincyanurat, Melaminphosphat, Dimelaminphosphat und Melaminpyrophosphat (alle Typ Formel VII), Hamstoffcyanurat (R⁹ bis R¹² =H; Typ Formel VIII) und Ammoniumpolyphosphat, (NH₄ PO₃)_{z}.

Die als Komponente B eingesetzten Stickstoffverbindungen werden, z. T. industriell, nach bekannten Verfahren hergestellt.

Die Menge der den Polymeren zuzusetzenden Stickstoffverbindung (Komponente B) kann innerhalb weiter Grenzen variieren. Im allgemeinen verwendet man 1 bis 30 Gew.-% bezogen auf das fertige Polymercompound. Die optimale Menge hängt von der Natur des Polymeren, der Art des eingesetzten Salzes (Komponente A) sowie vom Typ der Stickstoffverbindung selbst ab und kann durch Versuche leicht bestimmt werden. Bevorzugt sind 3 bis 20, insbesondere 5 bis 15 Gew.-%.

Bevorzugte thermoplastische Polymere sind technische Kunststoffe wie z. B. Polystyrol-HI (mit erhöhter Schlagzähigkeit), Polyphenylenether, Polyamide, Polyester, Polycarbonate und Blends bzw. Polyblends wie ABS oder PC/ABS.

Besonders bevorzugt sind Polyester, Polyamide und ABS-Polymere.

Die flammhemmenden Komponenten A und B können in Kunststoff-Formmassen eingearbeitet werden, indem z. B. alle Bestandteile als Pulver und/oder Granulat in einem Mischer vorgemischt und anschließend in einem Compoundieraggregat (z. B. einem Doppelschneckenextruder) in der Polymerschmelze homogenisiert werden. Die Schmelze wird üblicherweise als Strang abgezogen, gekühlt und granuliert. Die Komponenten A und B können auch separat über eine Dosieranlage direkt in das Compoundieraggregat eingebracht werden.

Es ist ebenso möglich, die flammhemmenden Zusätze A und B einem fertigen Polymergranulat beizumischen und die Mischung direkt auf einer Spritzgußmaschine zu Formteilen zu verarbeiten.

Bei Polyestern beispielsweise können die flammhemmenden Zusätze A und B auch bereits während der Polykondensation in die Polyestermasse gegeben werden.

Den Formmassen können neben den flammhemmenden Komponenten A und B auch Füll- und Verstärkungsstoffe wie Glasfasern, Glaskugeln oder Mineralien wie Kreide zugesetzt werden. Zusätzlich können die Formmassen noch andere Zusätze wie Antioxidantien, Lichtschutzmittel, Gleitmittel, Farbmittel, Nukleierungsmittel oder Antistatika enthalten. Beispiele für die verwendbaren Zusätze sind in EP-A -584 567 angegeben.

Die flammwidrigen Kunststoffmassen eignen sich zur Herstellung von Formkörpem, Filmen, Fäden und Fasern, z. B. durch Spritzgießen, Extrudieren oder Verpressen.

### Beispiele

### 1. Eingesetzte Komponenten

| Handelsübliche Polymere (Granulat): | | |
|---|---|---|
| Polybutylenterephthalat | (PBT-GV) | ®Celanex 2300 GV1/30 (Fa. Hoechst |
| | | ®Celanese, USA) enthält 30 % Glasfasern. |
| | (PBT) | ®Celanex 2500 (Fa. Hoechst Celanese, USA) enthält keine Füll- bzw. Verstärkungsstoffe. |
| | | |
| Polyamid 6 (PA 6) | | ®Durethan B29 (Fa. Bayer AG, D) enthält keine Füll- bzw. Verstärkungsstoffe. |
| | | |
| ABS-Polymer | | ®Novodur P2X (Fa. Bayer AG, D) enthält keine Füll- bzw. Verstärkungsstoffe. |

### Flammschutzmittelkomponenten (pulverförmig):

Aluminiumsalz des 1-Hydroxy-1H-phospholan-1-oxids, im folgenden als PHOLAL bezeichnet.
Aluminiumsalz des 1-Hydroxy-3-methyl-1H-phospholan-1-oxids, im folgenden als Methyl-PHOLAL bezeichnet.
Aluminiumsalz der Methylethylphosphinsäure, im folgenden als MEPAL bezeichnet (nicht cyclisches Phosphinat, zum Vergleich)

### Stickstoffhaltige Synergisten (pulverförmig):

Di-Melaminphosphat (Fa. DSM Chemicals & Fertilizers, NL)
Glycoluril (Soc. Francaise Hoechst, F)
®Hostaflam AP 422 (Fa. Clariant GmbH, D)
Melamincyanurat (Fa. DSM, NL)
Melaminphosphat (Fa. DSM, NL)
TPS-THEIC = oligomerer Terephthalsäureester des Tris(hydroxyethyl)isocyanurats (nach EP-A-584 562)

### 2. Vergleich der Wasserlöslichkeiten bei 20°C

| | | |
|---|---|---|
| Vergleichsbeispiel | MEPAL | 6,3 g/l |
| | PHOLAL | 4,3 g/l |

### 3. Herstellung, Verarbeitung und Prüfung von flammhemmenden Polymerformmassen

Die Flammschutzmittelkomponenten wurden in dem in den Tabellen angegebenen Verhältnis mit dem Polymergranulat und evtl. Additiven vermischt und auf einem Doppelschnecken-Extruder (Typ Leistritz LSM 30/34) bei Temperaturen von 230 bis 260 °C eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Toshiba IS 100 EN) bei Massetemperaturen von 240 bis 270 °C zu Prüfkörpern verarbeitet und anhand des UL 94-Tests (Underwriter Laboratories) auf Flammwidrigkeit geprüft und klassifiziert. Die Brennbarkeit der Prüfkörper wurde durch Bestimmung des Sauerstoffindex (LOI nach ASTM D 2863-77) beurteilt.

Die Tabellen 1 und 2 zeigen Vergleichsbeispiele, in denen Aluminiumsalze von 1-Hydroxy-dihydrophospholoxiden bzw. 1-Hydroxyphospholanoxiden als alleinige Flammschutzmittelkomponenten in PBT, PA 6 und ABS peprüft wurden. Tabelle 3 zeigt die Vergleichsbeispiele, in denen stickstoffhaltige Verbindungen als alleinige Komponenten geprüft wurden.
Die Ergebnisse der Beispiele, in denen die Salze gemäß der Erfindung in Kombination mit stickstoffhaltigen Verbindungen eingesetzt wurden, sind in Tabelle 4 aufgelistet. Alle Mengenangaben sind als Gew.-% aufgeführt und beziehen sich auf das fertige Polymercompound einschließlich Flammschutzausrüstung.

Aus den Beispielen geht hervor, daß stickstoffhaltige Verbindungen in der erfindungsgemäßen Kombination mit Metallsalzen der 1-Hydroxy-dihydrophospholoxide und der 1-Hydroxyphospholanoxide eine sehr gute flammhemmende Wirkung zeigen. Die Menge der Salze bezogen auf das fertige Polymercompound, die nötig ist, um eine V-0 oder V-1 oder V-2 Einstufung zu erreichen, kann in der synergistischen Kombination deutlich verringert werden. Durch den Einsatz der synergistischen Kombinationen gemäß der Erfindung lassen sich auch dünnwandige Formmassen herstellen, die die Brandklasse V-0 oder V-1 oder V-2 erfüllen.

**Tabelle 1:**

| Ergebnisse aus EP 97 102 722.2: Aluminiumsalz des 1-Hydroxy-2,5-dihydro-1H-phosphol-1-oxids (Formel lb, R¹ bis R⁴ = H) in 30% glasfaserverstärktem Polybutylenterephthalat. | |
|---|---|
| Al-Salz [%] | Klasse nach UL 94 (1,2 mm) |
| 20 | V-0 |
| 17,5 | V-1 |
| 15 | V-2 |
| 12,5 | V-2 |

**Tabelle 2:**

| Vergleichsbeispiele. Aluminiumsalze von 1-Hydroxyphospholanoxiden (Formel II) als alleinige Flammschutzmittelkomponente in PBT, PA 6 und ABS. | | | | | |
|---|---|---|---|---|---|
| Polymer | PHOLAL [%] | Methyl-PHOLAL [%] | Klasse nach UL 94 (1,6 mm) | Klasse nach UL 94 (0,8 mm) | LOI [%] |
| PBT-GV | 20 | | V-1 | V-1 | 37,0 |
| PBT- GV | 25 | | V-1 | V-1 | 41,0 |
| PBT- GV | | 20 | n.k.^{*)} | | |
| PBT- GV | | 25 | n.k.^{*)} | | |
| PBT | 10 | | V-2 | | 33,0 |
| PBT | 15 | | V-0 | V-0 | 34,0 |
| PBT | 20 | | V-0 | V-0 | 37,0 |
| PA 6 | 15 | | V-2 | V-2 | 28,5 |
| PA 6 | 20 | | V-2 | V-2 | 28,0 |
| ABS | 30 | | n.k.^{*)} | | 22,5 |

| | | | | | |
|---|---|---|---|---|---|
| *) n.k. = nicht klassifizierbar | | | | | |

**Tabelle 3:**

| Vergleichsbeispiele. Stickstoffhaltige Verbindungen als alleinige Flammschutzmittelkomponenten in PBT, PA 6 und ABS. | | | | | |
|---|---|---|---|---|---|
| Polymer | Melamincyanurat [%] | Melaminphosphat [%] | TPS-THEIC [%] | Hostaflam AP 422 [%] | Klasse nach UL 94 (1,6 mm) |
| PBT-GV | 10 | | | | n.k.^{*)} |
| PBT- GV | 20 | | | | n.k.^{*)} |
| PBT- GV | 25 | | | | n.k.^{*)} |
| PBT-GV | | 10 | | | n.k.^{*)} |
| PBT- GV | | 20 | | | n.k.^{*)} |
| PBT- GV | | | 10 | | n.k.^{*)} |
| PBT-GV | | | 25 | | n.k.^{*)} |
| PBT | 30 | | | | V-2 |
| PA 6 | | 20 | | | V-2 |
| ABS | | | | 15 | n.k.^{*)} |
| ABS | | | | 30 | V-2 |

| | | | | | |
|---|---|---|---|---|---|
| *) n.k. = nicht klassifizierbar | | | | | |

**Tabelle 4:**

| Beispiele. Aluminiumsalze von 1-Hydroxyphospholanoxiden (Formel II) in Kombination mit stickstoffhaltigen Synergisten. | | | | | | | |
|---|---|---|---|---|---|---|---|
| Polymer | PHOLAL [%] | Methyl-PHOLAL [%] | Synergist | Menge Synergist [%] | Klasse nach UL 94 (1,6 mm) | Klasse nach UL 94 (0,8 mm) | LOI [%] |
| PBT-GV | 8 | | Di-Melaminphosphat | 8 | V-1 | | 29,5 |
| PBT-GV | 10 | | Di-Melaminphosphat | 5 | V-1 | | 37,5 |
| PBT-GV | 10 | | Glycoluril | 10 | V-0 | V-2 | 34,5 |
| PBT-GV | 10 | | Glycoluril | 5 | V-1 | | 32,0 |
| PBT-GV | 10 | | Melamincyanurat | 10 | V-1 | V-1 | 42,0 |
| PBT-GV | 12 | | Melamincyanurat | 12 | V-0 | V-0 | 42,0 |
| PBT-GV | | 10 | Melamincyanurat | 10 | V-1 | | |
| PBT-GV | 10 | | Melaminphosphat | 10 | V-0 | V-0 | 29,5 |
| PBT-GV | | 10 | Melaminphosphat | 10 | V-0 | | |
| PBT-GV | 10 | | TPS-THEIC | 10 | V-1 | V-1 | 34,0 |
| PBT-GV | 12 | | TPS-THEIC | 12 | V-0 | V-0 | 42,0 |
| PBT-GV | | 10 | TPS-THEIC | 10 | V-1 | | |
| PBT | 10 | | Melamincyanurat | 5 | V-0 | V-0 | 33,0 |
| PBT | | 10 | Melamincyanurat | 5 | V-0 | | |
| PA 6 | 10 | | Melaminphosphat | 10 | V-0 | V-0 | 24,5 |
| ABS | 15 | | Hostaflam AP 422 | 15 | V-0 | | 26,0 |

## Patentansprüche

1. Synergistische Flammschutzmittel-Kombination für thermoplastische Polymere, die als Komponente A ein Salz von 1-Hydroxy-dihydrophospholoxiden gemäß der Formel (la) oder Formel (Ib) und/oder 1-Hydroxyphospholanoxiden gemäß der Formel (II) enthält, 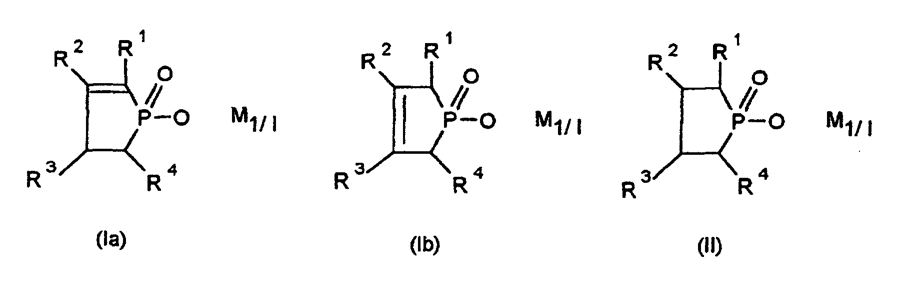 worin
R¹, R², R³, R⁴ Wasserstoff oder C₁-C₁₂-Alkyl,
M ein Metall aus der zweiten oder dritten Haupt- oder
Nebengruppe des Periodensystems,
I die Zahlen 1, 2 oder 3
bedeuten,
und die als Komponente B eine Stickstoffverbindung der Formel (III) bis (VIII) oder ein Gemisch der durch die Formeln bezeichneten Verbindungen enthält, 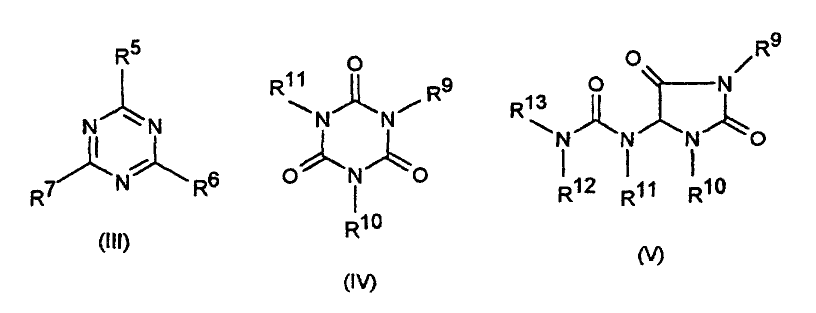 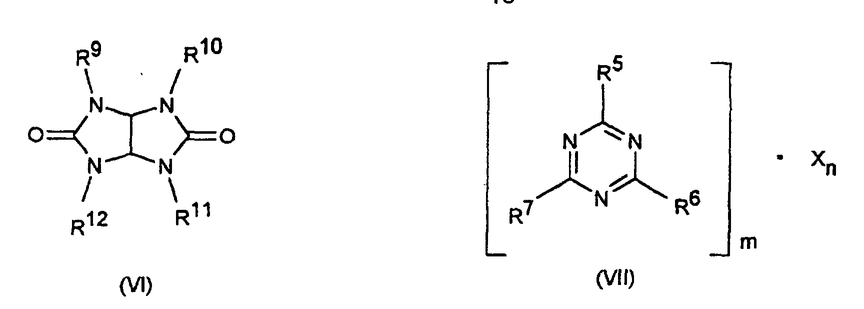 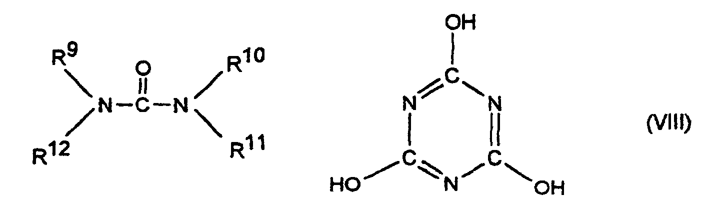 worin
R⁵ bis R⁷ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, wobei R⁸ und R⁹ nicht beide Wasserstoff sind, sowie N-alicyclisch oder N-aromatisch,
R⁸ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können,
bedeuten.

2. Flammschutzmittel-Kombination gemäß Anspruch 1, **dadurch gekennzeichnet, daß**
R¹ bis R⁴ Wasserstoff oder C₁-C₄-Alkyl,
M Aluminium, Magnesium, Calcium, Zink
I 1, 2 oder 3,
R⁵ bis R⁷ Wasserstoff, C₁-C₈-Alkyl, C₅-C₈-Cycloalkyl oder Alkylcycloalkyl möglicherweise substituiert mit einer Hydroxy- oder einer C₁-C₄-Hydroxyalkylfunktion, C₂-C₄-Alkenyl, C₁-C₄-Alkoxy, -Acyl, -Acyloxy, C₆-C₁₀-Aryl oder Arylalkyl, -OR⁸ und -N(R⁸)R⁹, wobei R⁸ und R⁹ nicht beide Wasserstoff sind, N-alicyclisch oder N-aromatisch,
R⁸ Wasserstoff, C₁-C₄-Alkyl, C₅-C₈-Cycloalkyl oder Alkylcycloalkyl möglicherweise substituiert mit einer Hydroxy- oder einer C₁-C₄-Hydroxyalkylfunktion, C₂-C₄-Alkenyl, C₁-C₄-Alkoxy, -Acyl, -Acyloxy, C₆-C₁₀-Aryl oder Arylalkyl,
X Cyanursäure, Phosphorsäure, Orthoborsäure, Metaborsäure
bedeuten.

3. Flammschutzmittel-Kombination gemäß Anspruch 1, **dadurch gekennzeichnet, daß**
R¹ bis R⁴ Wasserstoff, Methyl, Ethyl,
M Aluminium,
R⁵ bis R⁷ Wasserstoff, Phenyl,
R⁸ Wasserstoff, C₁-C₄-Alkyl,
R⁹ bis R¹⁹ Wasserstoff, C₁-C₄-Hydroxyalkyl,
X Phosphorsäure oder Cyanursäure
bedeuten.

4. Flammschutzmittel-Kombination gemäß Anspruch 1, **dadurch gekennzeichnet, daß** es sich bei der Komponente B um Benzoguanamin, Tris(hydroxyethyl)isocyanurat, Allantoin, Glycoluril sowie Melamincyanurat, Melaminphosphat, Dimelaminphosphat und Melaminpyrophosphat und Ammoniumpolyphosphat handelt.

5. Verwendung einer Flammschutzmittel-Kombination gemäß Anspruch 1 zur flammfesten Ausrüstung von thermoplastischen Polymeren.

6. Verwendung gemäß Anspruch 5, **dadurch gekennzeichnet, daß** es sich bei den Polymeren um Polyester, Polyamiden und ABS-Polymeren handelt.

7. Verwendung gemäß Anspruch 5 oder 6, **dadurch gekennzeichnet, daß** Komponente A und B unabhängig voneinander jeweils in einer Konzentration von 1 bis 30 Gew.-%, bezogen auf das fertige Polymercompound, eingesetzt werden.

8. Verwendung gemäß Anspruch 5 oder 6, **dadurch gekennzeichnet, daß** Komponente A und B unabhängig voneinander jeweils in einer Konzentration von 3 bis 20 Gew.-%, bezogen auf das fertige Polymercompound, eingesetzt werden.

9. Verwendung gemäß Anspruch 5 oder 6, **dadurch gekennzeichnet, daß** Komponente A und B unabhängig voneinander jeweils in einer Konzentration von 5 bis 15 Gew.-%, bezogen auf das fertige Polymercompound, eingesetzt werden.

10. Flammfest ausgerüstete Kunststoff-Formmasse, enthaltend eine Flammschutzmittel-Kombination gemäß den Ansprüchen 1 bis 4.

## Claims

1. A synergistic flame retardant combination for thermoplastic polymers which comprises as component A a salt of 1-hydroxydihydrophosphole oxides of the formula (Ia) or formula (Ib) and/or 1-hydroxyphospholane oxides of the formula (II) 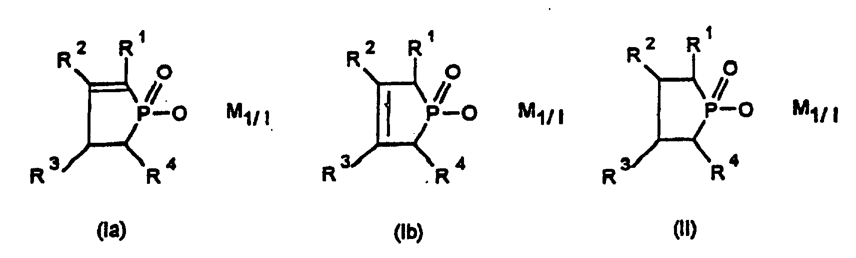 in which
R¹, R², R³, R⁴ are hydrogen or C₁-C₁₂-alkyl,
M is a metal from the second or third main group or subgroup of the Periodic Table, and
1 is 1, 2 or 3
and as component B a nitrogen compound of the formula (III) to (VIII) or a mixture of the compounds designated by the formulae 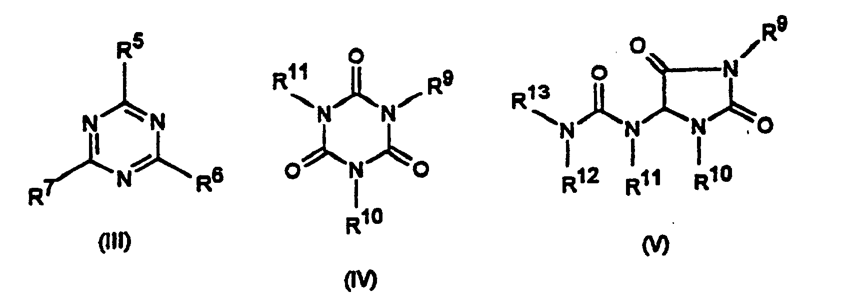 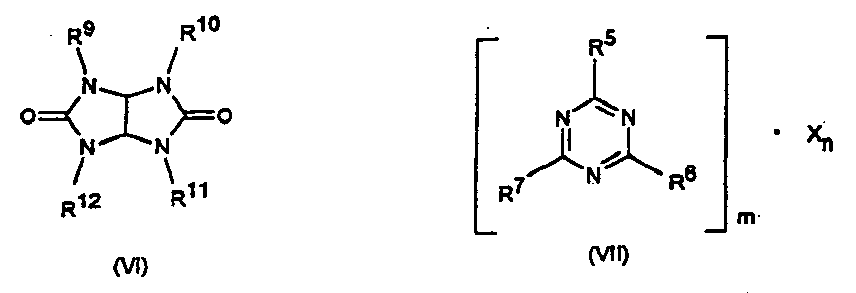 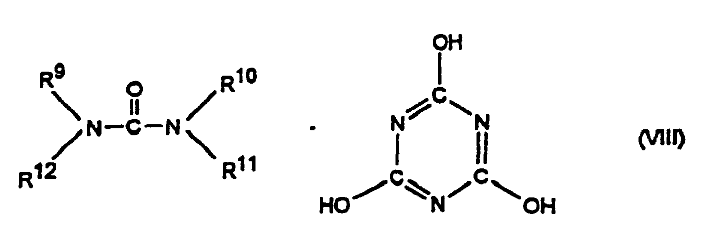 in which
R⁵ to R⁷ are hydrogen, C₁-C₈-alkyl, C₅-C₁₆-cycloalkyl or
-alkylcycloalkyl, possibly substituted by a hydroxyl or a C₁-C₄-hydroxyalkyl function, C₂-C₈-alkenyl, C₁-C₈-alkoxy, -acyl, -acyloxy, C₆-C₁₂-aryl or -arylalkyl, -OR⁸ and -N(R⁸)R⁹, where R⁸ and R⁹ are not both hydrogen, and also N-alicyclic or N-aromatic,
R⁸ is hydrogen, C₁-C₈-alkyl, C₅-C₁₆-cycloalkyl or -alkylcycloalkyl, possibly substituted by a hydroxyl or a C₁-C₄-hydroxyalkyl function, C₂-C₈-alkenyl, C₁-C₈-alkoxy, -acyl, -acyloxy or C₆-C₁₂-aryl or -arylalkyl,
R⁹ to R¹³ are the same groups as R⁸ and also -O-R⁸, m and n independently of one another are 1, 2, 3 or 4, and
X denotes acids which are able to form adducts with triazine compounds (III).

2. The flame retardant combination as claimed in claim 1, wherein
R¹ to R⁴ are hydrogen or C₁-C₄-alkyl,
M is aluminum, magnesium, calcium or zinc,
1 is 1, 2 or 3,
R⁵ to R⁷ are hydrogen, C₁-C₄-alkyl, C₅-C₈-cycloalkyl or alkylcycloalkyl possibly substituted by a hydroxyl or a C₁-C₄--hydroxyalkyl function, C₂-C₄-alkenyl, C₁-C₄-alkoxy, -acyl, -acyloxy, C₆-C₁₀-aryl or arylalkyl, -OR⁸ and N(R⁸)R⁹, where R⁸ and R⁹ are not both hydrogen, and also N-alicyclic or N-aromatic,
R⁸ is hydrogen, C₁-C₄-alkyl, C₅-C₈-cycloalkyl or alkylcycloalkyl possibly substituted by a hydroxyl or a C₁-C₄-hydroxyalkyl function, C₂-C₄-alkenyl, C₁-C₄-alkoxy, -acyl, -acyloxy, C₆-C₁₀-aryl or arylalkyl, and
X is cyanuric acid, phosphoric acid, orthoboric acid or metaboric acid.

3. The flame retardant combination as claimed in claim 1, wherein
R¹ to R⁴ are hydrogen, methyl or ethyl,
M is aluminum,
R⁵ to R⁷ are hydrogen or phenyl,
R⁸ is hydrogen or C₁-C₄-alkyl,
R⁹ to R¹⁹ are hydrogen or C₁-C₄-hydroxyalkyl, and
X is phosphoric acid or cyanuric acid.

4. The flame retardant combination as claimed in claim 1, wherein component B is benzoguanamine, tris(hydroxyethyl) isocyanurate, allantoin, glycoluril or melamine cyanurate, melamine phosphate, dimelamine phosphate and melamine pyrophosphate and ammonium polyphosphate.

5. The use of a flame retardant combination as claimed in claim 1 for conferring flame retardancy on thermoplastic polymers.

6. The use as claimed in claim 5, wherein the polymers comprise polyesters, polyamides and ABS polymers.

7. The use as claimed in claim 5 or 6, wherein component A and B are employed independently of one another each in a concentration of from 1 to 30% by weight, based on the finished polymer compound.

8. The use as claimed in claim 5 or 6, wherein component A and B are employed independently of one another each in a concentration of from 3 to 20% by weight, based on the finished polymer compound.

9. The use as claimed in claim 5 or 6, wherein component A and B are employed independently of one another each in a concentration of from 5 to 15% by weight, based on the finished polymer compound.

10. A flame retardant plastics molding composition comprising a flame retardant combination as claimed in claims 1 to 4.

## Revendications

1. Combinaison synergique d'agents ignifugeants pour polymères thermoplastiques qui contient comme composant A un sel de 1-hydroxy-dihydrophospholoxydes selon la formule (Ia) ou la formule (Ib) et/ou de 1-hydroxyphospholaneoxydes selon la formule (II), 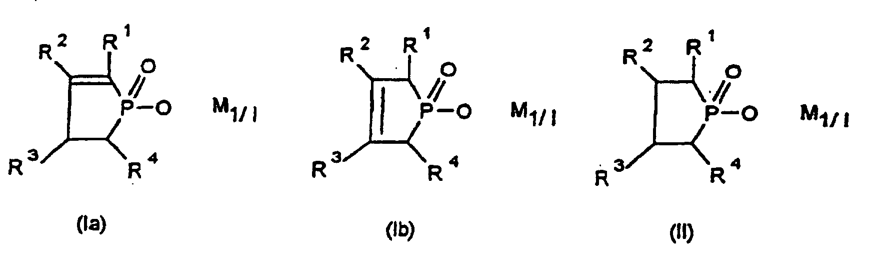 dans lesquelles
R¹, R², R³, R⁴ représentent un atome d'hydrogène ou un groupe alkyle en C₁ à C₁₂,
M représente un mélange choisi parmi le deuxième ou troisième groupe principal ou secondaire de la Classification Périodique des éléments,
I représente les nombres 1, 2 ou 3,
et qui contient comme composant B un composé azoté de formule (III) à (VIII) ou un mélange des composés désignés par les formules 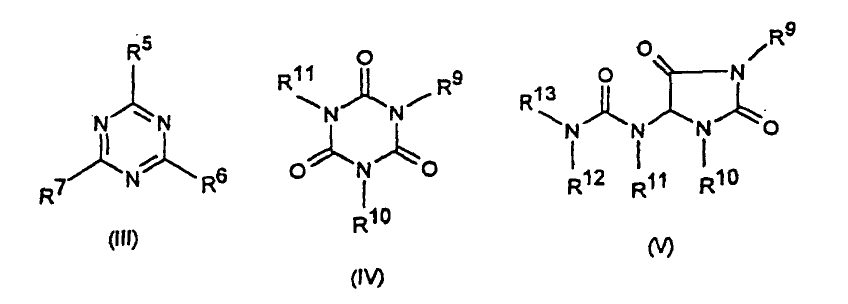 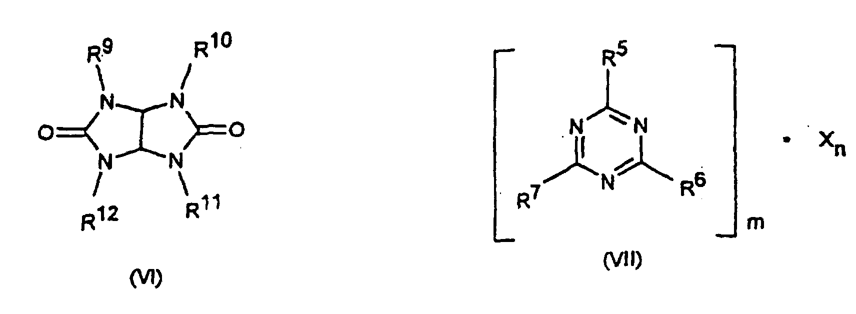 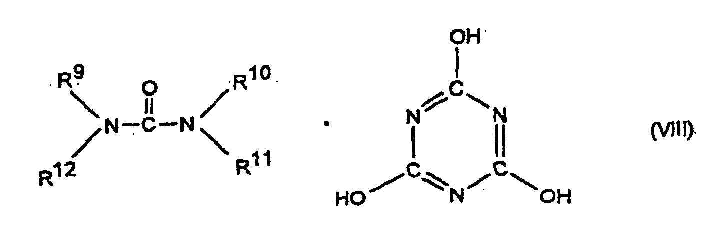 dans lesquelles
R⁵ à R⁷ représentent un atome d'hydrogène, un groupe alkyle en C₁ à C₈, cycloalkyle ou alkylcycloalkyle en C₅ à C₁₆, éventuellement substitué par une fonction hydroxy ou hydroxyalkyle en C₁ à C₄, alcényle en C₂ à C₈, alcoxy, acyle, acyloxy en C₁ à C₈, aryle ou arylalkyle en C₆ à C₁₂, -OR⁸ et -N(R⁸)R⁹, dans lesquelles R⁸ et R⁹ ne sont pas tous les deux un atome d'hydrogène, ainsi que N-alicycliques ou N-aromatiques,
R⁸ représente un atome d'hydrogène, un groupe alkyle en C₁ à C₈, cycloalkyle ou alkylcycloalkyle en C₅ à C₁₆, éventuellement substitués par une fonction hydroxy ou hydroxyalkyle en C₁ à C₄, alcényle en C₂ à C₈, alcoxy, acyle, acyloxy en C₁ à C₈ ou aryle ou arylalkyle en C₆ à C₁₂,
R⁹ à R¹³ représentent des groupes identiques à R⁸ ainsi que -O-R⁸,
m et n représentent indépendamment l'un de l'autre 1, 2, 3 ou 4,
X représente des acides, qui peuvent former des composés d'addition avec des composés de triazine (III).

2. Combinaison d'agents ignifugeants selon la revendication 1, **caractérisée en ce que**
R¹ à R⁴ représente un atome d'hydrogène ou un groupe alkyle en C₁ à C₄,
M représente l'aluminium, le magnésium, le calcium, le zinc,
I représente 1, 2 ou 3,
R⁵ à R⁷ représente un atome d'hydrogène, un groupe alkyle en C₁ à C₄, cycloalkyle ou alkylcycloalkyle en C₅ à Ce éventuellement substitué par une fonction hydroxy ou hydroxyalkyle en C₁ à C₄, alcényle en C₂ à C₄, alcoxy, acyle, acyloxy en C₁ à C₄, aryle ou arylalkyle en C₆ à C₁₀, -OR⁸ et N(R⁸)R⁹, dans lesquelles R⁸ et R⁹ ne sont pas ensemble un atome d'hydrogène, N-alicycliques ou N-aromatiques,
R⁸ représente un atome d'hydrogène, un groupe alkyle en C₁ à C₄, cycloalkyle ou alkylcycloalkyle en C₅ à C₈, éventuellement substitué par une fonction hydroxy ou hydroxyalkyle en C₁ à C₄, alcényle en C₂ à C₄, alcoxy, acyle, acyloxy en C₁ à C₄, aryle ou arylalkyle en C₆ à C₁₀,
X représente l'acide cyanurique, phosphorique, orthoborique, métaborique.

3. Combinaison d'agents ignifugeants selon la revendication 1, **caractérisée en ce que**
R¹ à R⁴ représente un atome d'hydrogène, un groupe méthyle, éthyle,
M représente un atome d'aluminium,
R⁵ à R⁷ représente un atome d'hydrogène, un groupe phényle,
R⁸ représente un atome d'hydrogène, un groupe alkyle en C₁ à C₄,
R⁹ à R¹⁹ représente un atome d'hydrogène, un groupe hydroxyalkyle en C₁ à C₄,
X représente l'acide phosphorique ou l'acide cyanurique.

4. Combinaison d'agents ignifugeants selon la revendication 1, **caractérisée en ce qu'**il s'agit pour le composant B de la benzoguanamine, du tris(hydroxyéthyl)-isocyanurate, de l'allantoïne, du glycolurile ainsi que du cyanurate de mélamine, du dimélaminephosphate et du pyrophosphate de mélamine et du polyphosphate d'ammonium.

5. Utilisation d'une combinaison d'agents ignifugeants selon la revendication 1 pour la garniture ignifugée de polymères thermoplastiques.

6. Utilisation selon la revendication 5, **caractérisée en ce qu'**il s'agit pour les polymères de polyesters, polyamides et de polymères ABS.

7. Utilisation selon la revendication 5 ou 6, **caractérisée en ce qu'**on utilise les composants A et B indépendamment l'un de l'autre respectivement en une concentration de 1 à 30 % en poids, par rapport au composé polymère fini.

8. Utilisation selon la revendication 5 ou 6, **caractérisée en ce qu'**on utilise les composants A et B indépendamment l'un de l'autre respectivement en une concentration de 3 à 20 % en poids, par rapport au composé polymère fini.

9. Utilisation selon la revendication 5 ou 6, **caractérisée en ce qu'**on utilise les composants A et B indépendamment l'un de l'autre respectivement en une concentration de 5 à 15 % en poids, par rapport au composé polymère fini.

10. Matière plastique de moulage ignifugée, contenant une combinaison d'agents ignifugeants selon les revendications 1 à 4.
